# EUROPÄISCHE PATENTSCHRIFT

(11) **EP 3 676 059 B1**
(45) Veröffentlichungstag und Bekanntmachung des Hinweises auf die Patenterteilung: **23.07.2025**
(21) Anmeldenummer: 18762827.6
(22) Anmeldetag: 30.08.2018
(51) Int. Cl.: B25J 13/08, B25J 19/02, B25J 9/16, G05B 19/423

(54) **MANIPULATORSYSTEM UND VERFAHREN ZUM STEUERN EINES ROBOTISCHEN MANIPULATORS**
MANIPULATOR SYSTEM AND METHOD FOR CONTROLLING A ROBOTIC MANIPULATOR
SYSTÈME MANIPULATEUR ET PROCÉDÉ DE COMMANDE D'UN MANIPULATEUR ROBOTIQUE

(30) Priorität: 30.08.2017 DE 102017215114
(43) Veröffentlichungstag der Anmeldung: 08.07.2020
(73) Patentinhaber: Deutsches Zentrum für Luft- und Raumfahrt e.V., 51147 Köln (DE)
(72) Erfinder: STEINMETZ, Franz, 82362 Weilheim (DE)
(74) Vertreter: dompatent von Kreisler Selting Werner - Partnerschaft von Patent- und Rechtsanwälten mbB
(86) Internationale Anmeldenummer: PCT/EP2018/073383
(87) Internationale Veröffentlichungsnummer: WO 2019/043116

(56) Entgegenhaltungen:
- EP-A1- 2 131 257
- WO-A1-2013/156468
- US-A1- 2013 211 592
- WOSCH T ET AL: "Reactive motion control for human-robot tactile interaction", PROCEEDINGS / 2002 IEEE INTERNATIONAL CONFERENCE ON ROBOTICS AND AUTOMATION : MAY 11 - 15, 2002, WASHINGTON, D.C, IEEE SERVICE CENTER, PISCATAWAY, NJ, vol. 4, 11 May 2002 (2002-05-11), pages 3807, XP032882734, ISBN: 978-0-7803-7272-6, DOI: 10.1109/ROBOT.2002.1014313
- "Robotics Research. : the 14th International Symposium ISRR / Cédric Pradalier ... (ed.)", vol. 70, 1 January 2011, BERLIN [U.A.] : SPRINGER, 2011, DE, ISBN: 978-3-642-19456-6, article SAMI HADDADIN ET AL: "Towards the Robotic Co-Worker", pages: 261 - 282, XP055240478, DOI: 10.1007/978-3-642-19457-3_16
- IÑAKI MAURTUA ET AL: "Human-robot collaboration in industrial applications : Safety, interaction and trust", INTERNATIONAL JOURNAL OF ADVANCED ROBOTIC SYSTEMS, vol. 14, no. 4, 1 July 2017 (2017-07-01), CR, XP055528041, ISSN: 1729-8814, DOI: 10.1177/1729881417716010

## Beschreibung

Die Erfindung betrifft ein Manipulatorsystem sowie ein Verfahren zum Steuern eines robotischen Manipulators.

Im Stand der Technik existieren Anwendungen, in denen ein Roboter in der Nähe eines Menschen betrieben wird, ohne dass sich der Roboter gesichert, beispielsweise hinter einem Zaun befindet. Hierbei ist es möglich, dass der menschliche Benutzer dem Roboter Anweisungen gibt. Dies kann beispielsweise über einen Computer, ein Tablet oder per Spracheingabe erfolgen.

Auch ist es möglich, den Roboter selbst als haptisches Eingabegerät zu nutzen. Hierbei wird der Roboter so konfiguriert, dass er auf Druck etwas nachgibt, so dass beispielsweise ein Druck gegen den Endeffektor als eine Eingabe für eine bestimmte Aktion interpretiert wird.

Aufgabe der Erfindung ist es, ein Manipulatorsystem bereitzustellen, das eine vereinfachte Bedienung aufweist. Ferner ist es Aufgabe der Erfindung, ein Verfahren für ein einfaches Steuern eines robotischen Manipulators bereitzustellen.

Die Veröffentlichung WOSCH T ET AL: "Reactive motion control for human-robot tactile Interaction", Proceedings / 2002 IEEE INTERNATIONAL CONFERENCE ON ROBOTICS AND AUTOMATION: MAY 11-15,2002, WASHINGTON, D.C., IEEE SERVICE CENTER, PISCATAWAY, NJ, Bd, 4, 11. Mai 2002 (2002-05-11), Seite 3807, XP032882734, DOI: 10.1109/ROBOT.2002.1014313, ISBN: 978-0-7803-7272-6 offenbart ein Manipulatorsystem mit einem robotischen Manipulator sowie taktilen Sensoren zum Erkennen einer Kraft, die von außen auf den Manipulatorarm aufgebracht wird. Es wird eine Anzeige verwendet, durch die Stellen am Manipulator markiert werden, an denen durch das Aufbringen einer Kraft von außen eine Kalibrierung des robotischen Manipulators erfolgt.

WO 2013/156468 A1 beschreibt ein Manipulatorsystem mit einer Augmented-Reality-Anzeige, auf der beispielsweise ein Pfeil angezeigt werden kann, der in eine Richtung weist, in die der Manipulatorarm bewegt werden müsste, um zu einer größeren Erreichung des gewünschten Zielarbeitsraums zu kommen.

Die Lösung der Aufgabe erfolgt erfindungsgemäß durch die Merkmale der Ansprüche 1 und 6.

Das erfindungsgemäße Manipulatorsystem weist einen robotischen Manipulator auf, der Sensoren zum Erkennen einer Kraft und/oder eines Drehmoments aufweist, die von außen auf den Manipulator aufgebracht wird. Durch ein Aufbringen einer Kraft und/oder eines Drehmoments von außen auf den Manipulator sind Eingabebefehle für den Manipulator zur Bedienung des Manipulatorsystems erzeugbar, wie dies bereits aus dem Stand der Technik bekannt ist.

Das Manipulatorsystem weist erfindungsgemäß eine Augmented-Reality-Anzeigevorrichtung auf, durch die ein Anzeigen von Stellen am Manipulatorarm erfolgt, an denen durch das Aufbringen einer Kraft und/oder eines Drehmoments von außen ein Befehl für den robotischen Manipulator erzeugbar ist. Anders ausgedrückt werden an diesen Stellen des Manipulators, das heißt in einem unmittelbaren räumlichen Zusammenhang zu diesem, die Interaktionsmöglichkeiten mit dem Manipulator angezeigt.

Hierdurch ist es einem Benutzer möglich, den robotischen Manipulator bzw. das Manipulatorsystem auf sehr einfache Weise zu bedienen. Beispielsweise ist es möglich, die vorhandenen Interaktionsmöglichkeiten kontextabhängig anzuzeigen, so dass je nach Situation oder Betriebszustand, in der sich das Manipulatorsystem befindet, verschiedene Interaktionsmöglichkeiten am Manipulatorarm angezeigt werden.

Es ist bevorzugt, dass die Augmented-Reality-Anzeigevorrichtung eine Augmented-Reality-Brille ist.

Weiterhin ist es bevorzugt, dass ein Anzeigen einer Richtung erfolgt, in die der Manipulator bewegt werden muss, um einen bestimmten Eingabebefehl zu erzeugen. Dies kann beispielsweise durch die Anzeige eines Pfeils an einer bestimmten Stelle des robotischen Manipulators erfolgen.

Erfindungsgemäß wird an der entsprechenden Stelle des Manipulators angezeigt, welcher Befehl durch das Aufbringen einer Kraft und/oder eines Drehmoments an der entsprechenden Stelle erzeugt wird. Dies kann beispielsweise durch Symbole, Piktogramme oder durch kurze Texte erfolgen. Hierdurch erkennt der Benutzer unmittelbar und sehr intuitiv, welche Auswirkungen das Aufbringen einer Kraft und/oder eines Drehmoments an einer bestimmten Stelle des Manipulators zur Folge haben wird. Das Bedienen des Manipulatorsystems ist somit auf diese Weise ohne eine Bedienungsanleitung auf sehr intuitive Weise möglich.

In einer bevorzugten Ausführungsform weist die Augmented-Reality-Brille Marker auf, so dass durch ein Kameratrackingsystem die absolute Position der Augmented-Reality-Brille im Raum bestimmt wird. Derartige Verfahren sind aus dem Stand der Technik bekannt. Basierend hierauf kann die Position der Augmented-Reality-Brille relativ zum robotischen Manipulator berechnet werden. Hierdurch ist es möglich, die Position und Orientierung der Interaktionsmöglichkeiten in Relation zum Manipulator in der Augmented-Reality-Anzeigevorrichtung zu berechnen.

Die Erfindung betrifft ferner ein Verfahren zum Steuern eines robotischen Manipulators, der Teil eines Manipulatorsystems ist. Dieser weist Sensoren zum Erkennen einer Kraft und/oder eines Drehmoments auf, die von außen auf den Manipulator aufgebracht werden. Durch das Aufbringen einer Kraft und/oder eines Drehmoments von außen auf den Manipulatorarm werden Eingabebefehle für den robotischen Manipulator zur Bedienung des Manipulatorsystems erzeugt.

Erfindungsgemäß wird auf einer Augmented-Reality-Anzeigevorrichtung mindestens eine Stelle am Manipulator angezeigt, an der das Aufbringen einer Kraft und/oder eines Drehmoments von außen einen Befehl für den robotischen Manipulator erzeugt.

Das erfindungsgemäße Verfahren kann sämtliche Merkmale aufweisen, die im Zusammenhang mit dem Manipulatorsystem beschrieben wurden und umgekehrt.

Es ist bevorzugt, dass die absolute Position der Augmented-Reality-Anzeigevorrichtung im Raum und die Gelenkstellungen des robotischen Manipulators ermittelt werden, wobei basierend hierauf die Position der Augmented-Reality-Brille relativ zum robotischen Manipulator berechnet wird.

Weiterhin ist es bevorzugt, dass die Anzeige am Manipulatorarm auf der Augmented-Reality-Anzeigevorrichtung abhängig vom Betriebszustand des Manipulatorsystems erfolgt. Auch ist es möglich, dass die Anzeige kontext- oder statusabhängig erfolgt. Anders ausgedrückt erfolgt die Anzeige in Abhängigkeit von bestimmten Kontexten oder Zuständen, in denen sich das Manipulatorsystem befindet. Der Zustand des Manipulatorsystems kann hierbei auch abhängig vom ausgeführten Programm und dessen Ausführungszustand sein.

Hierbei kann beispielsweise das Manipulatorsystem mindestens drei Betriebszustände aufweisen, nämlich einen ersten bereiten Betriebszustand, in dem ein Programm durch Aufbringen einer Kraft und/oder eines Drehmoments auf eine bestimmte Stelle des robotischen Manipulators gestartet wird. Bei einem solchen Programm handelt es sich typischerweise um eine Abfolge von (Bewegungs-) Befehlen.

Weiterhin existiert ein handgeführter Zustand, in dem der Manipulator frei durch die Hand eines Benutzers bewegbar ist. Der handgeführte Zustand dient dazu, Korrekturen während der Ausführung vorzunehmen. Beispielsweise kann der Manipulator um ein Hindernis herumgeführt werden, um anschließend die Bewegung fortführen zu lassen.

Ferner ist ein Kollisionszustand vorgesehen, in dem das Aufbringen einer Kraft aus einer ersten Richtung als Befehl zum Fortfahren interpretiert wird. Kommt es während der Ausführung eines Programmes zu einer Kollision, so wird der Programmfluss (zur Sicherheit) unterbrochen. Das Aufbringen einer Kraft (etwa von oben) signalisiert, dass die Kollision bestätigt wird und der Programmfluss an der Unterbrechung fortgesetzt werden kann. Das Aufbringen einer Kraft aus einer zweiten Richtung kann einen Greifer des robotischen Manipulators öffnen, während das Aufbringen einer Kraft aus einer dritten Richtung, die der zweiten Richtung entgegengesetzt ist, den Greifer schließt. Ein Aufbringen einer Kraft aus einer vierten Richtung kann das Manipulatorsystem in den handgeführten Zustand überführen.

Weiterhin ist es bevorzugt, dass im handgeführten Zustand auf der Augmented-Reality-Anzeigevorrichtung eine virtuelle Ebene auf einer definierten Höhe über der Roboterbasis, insbesondere parallel zum Boden, auf dem sich das Manipulatorsystem befindet, eingeblendet wird. Wenn der Endeffektor des Manipulators auf Höhe dieser Ebene gebracht wird, wird der Manipulator in den Kollisionszustand überführt.

Weiterhin ist es bevorzugt, dass kontinuierlich ausgewertet wird, ob der Manipulator sich im Sichtfeld des Benutzers befindet. Sofern dies der Fall ist, wird der Betriebszustand des Manipulatorsystems detektiert. In Abhängigkeit von diesem Betriebszustand werden die möglichen Interaktionsvarianten in der Augmented-Reality-Anzeigevorrichtung angezeigt.

Weiterhin ist es bevorzugt, dass die extern auf den Manipulator wirkenden Kräfte und seine Gelenkkonfiguration ausgewertet werden und eine Übereinstimmung mit einer bestimmten Interaktionsvariante überprüft wird. Sofern eine solche Interaktionsvariante erkannt wird, kann die hiermit verbundene Aktion ausgeführt werden.

Im Folgenden wird eine bevorzugte Ausführungsform der Erfindung anhand einer Figur erläutert.

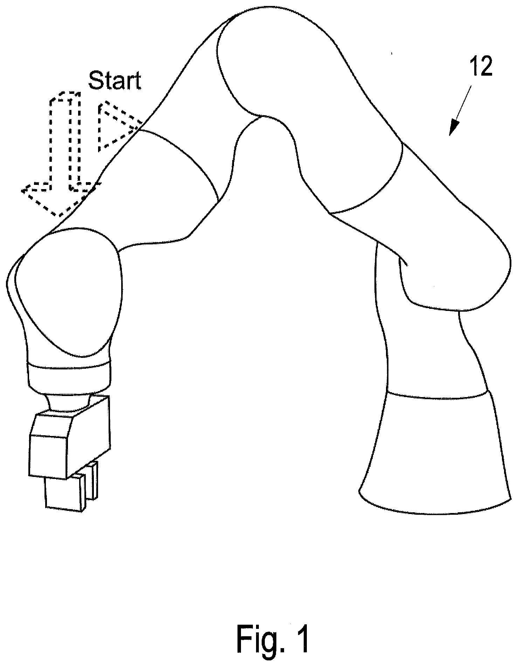

Die Figur zeigt die Darstellung eines robotischen Manipulators 12. Am linken Teil des Manipulators 12 wird eine Interaktionsmöglichkeit in Form eines Pfeils eingeblendet. Dieser Pfeil mit dem entsprechenden Text und dem Play-Symbol wird in der Augmented-Reality-Anzeigevorrichtung angezeigt und deutet an, dass durch einen Druck von oben auf den Endeffektor, beispielsweise die Aktion "Start" ausgelösen wird, bei der ein bestimmtes Programm gestartet wird. Auf diese Weise kann ein Nutzer sehr intuitiv mit dem Manipulatorsystem interagieren.

## Patentansprüche

1. Manipulatorsystem, mit
einem robotischen Manipulator (12),
wobei der Manipulator Sensoren zum Erkennen einer Kraft und/oder eines Drehmoments aufweist, die von außen auf den Manipulator aufgebracht wird,
wobei durch ein Aufbringen einer Kraft und/oder eines Drehmoments von außen auf den Manipulator (12) Eingabebefehle für den Manipulator (12) zur Bedienung des Manipulatorsystems erzeugbar sind,
wobei das Manipulatorsystem ferner eine Augmented-Reality-Anzeigevorrichtung aufweist, durch die ein Anzeigen von Stellen am Manipulator (12) erfolgt, an denen durch das Aufbringen einer Kraft und/oder eines Drehmoments von außen ein Befehl für den robotischen Manipulator (12) erzeugt wird,
wobei an der entsprechenden Stelle des Manipulators (12) angezeigt wird, welcher Befehl durch das Aufbringen einer Kraft und/oder eines Drehmoments an der entsprechenden Stelle erzeugt wird, sodass der Nutzer unmittelbar und intuitiv erkennt welche Auswirkungen das Aufbringen einer Kraft und/oder eines Drehmoments an einer bestimmten Stelle des Manipulators (12) zur Folge haben wird.

2. Manipulatorsystem nach Anspruch 1, **dadurch gekennzeichnet, dass** die Augmented-Reality-Anzeigevorrichtung eine Augmented-Reality-Brille ist.

3. Manipulatorsystem nach Anspruch 1 oder 2, **dadurch gekennzeichnet, dass** ein Anzeigen einer Richtung erfolgt, in die der Manipulator (12) bewegt werden muss, um einen bestimmten Eingabebefehl zu erzeugen.

4. Manipulatorsystem nach Ansprüchen 1 - 3, **dadurch gekennzeichnet, dass** an der entsprechenden Stelle des Manipulators (12) angezeigt wird, welcher Befehl durch das Aufbringen einer Kraft und/oder eines Drehmoments an der entsprechenden Stelle erzeugt wird.

5. Manipulatorsystem nach Ansprüchen 2 - 4, **dadurch gekennzeichnet, dass** die Augmented-Reality-Brille Marker aufweist, so dass durch ein Kameratrackingsystem die absolute Position der Augmented-Reality-Brille im Raum bestimmt wird, wobei basierend hierauf die Position der Augmented-Reality-Brille relativ zum robotischen Manipulator berechnet wird.

6. Verfahren zum Steuern eines robotischen Manipulators (12) der Teil eines Manipulatorsystems ist,
wobei der Manipulator Sensoren zum Erkennen einer Kraft und/oder eines Drehmoments aufweist, die von außen auf den Manipulator aufgebracht wird,
wobei durch ein Aufbringen einer Kraft und/oder eines Drehmoments von außen auf den Manipulator (12) Eingabebefehle für den Manipulator (12) zur Bedienung des Manipulatorsystems erzeugt werden,
wobei das Manipulatorsystem ferner eine Augmented-Reality-Anzeigevorrichtung aufweist, durch die ein Anzeigen von Stellen am Manipulator (12) erfolgt, an denen durch das Aufbringen einer Kraft und/oder eines Drehmoments von außen ein Befehl für den robotischen Manipulator (12) erzeugt wird,
wobei an der entsprechenden Stelle des Manipulators (12) angezeigt wird, welcher Befehl durch das Aufbringen einer Kraft und/oder eines Drehmoments an der entsprechenden Stelle erzeugt wird, sodass der Nutzer unmittelbar und intuitiv erkennt welche Auswirkungen das Aufbringen einer Kraft und/oder eines Drehmoments an einer bestimmten Stelle des Manipulators (12) zur Folge haben wird.

7. Verfahren nach Anspruch 6, **dadurch gekennzeichnet, dass** die absolute Position der Augmented-Reality-Anzeigevorrichtung im Raum und die Gelenkstellungen des robotischen Manipulators (12) ermittelt werden,
wobei basierend hierauf die Position der Augmented-Reality-Brille relativ zum robotischen Manipulator (12) berechnet wird.

8. Verfahren nach Anspruch 6 oder 7, **dadurch gekennzeichnet, dass** die Anzeige auf der Augmented-Reality-Anzeigevorrichtung abhängig von einem Kontext und/oder Status erfolgt, in dem sich das Manipulatorsystem befindet.

9. Verfahren nach einem der Ansprüche 6 bis 8, **dadurch gekennzeichnet, dass** die Anzeige am Manipulatorarm auf der Augmented-Reality-Anzeigevorrichtung abhängig vom Betriebszustand des Manipulatorsystems erfolgt, wobei das Manipulatorsystem insbesondere mindestens drei Betriebszustände aufweist, nämlich
einen bereiten Betriebszustand, in dem ein Programm durch Aufbringen einer Kraft und/oder eines Drehmoments auf eine bestimmte Stelle des robotischen Manipulators (12) gestartet wird,
einem handgeführten Zustand, in dem der robotische Manipulator (12) frei von Hand bewegbar ist und
einem Kollisionszustand, in dem das Aufbringen einer Kraft aus einer ersten Richtung als Befehl zum Fortfahren interpretiert wird, ein Aufbringen einer Kraft aus einer zweiten Richtung einen Greifer des robotischen Manipulators (12) öffnet, ein Aufbringen einer Kraft aus einer dritten Richtung, die der zweiten Richtung entgegengesetzt ist, den Greifer schließt, ein Aufbringen einer Kraft aus einer vierten Richtung das Manipulatorsystem in den handgeführten Zustand überführt.

10. Verfahren nach Anspruch 9, **dadurch gekennzeichnet, dass** im handgeführten Zustand auf der Augmented-Reality-Anzeigevorrichtung eine virtuelle Ebene auf einer definierten Höhe über der Roboterbasis, insbesondere parallel zu einem Boden, eingeblendet wird, wobei wenn der Endeffektor des robotischen Manipulators (12) auf Höhe dieser Ebene gebracht wird, das Manipulatorsystem in den Kollisionszustand überführt wird.

11. Verfahren nach Ansprüchen 6 - 10, **dadurch gekennzeichnet, dass** kontinuierlich ausgewertet wird, ob der Manipulator (12) sich im Sichtfeld des Benutzers befindet und sofern dies der Fall ist, der Betriebszustand des Manipulatorsystems detektiert wird und in Abhängigkeit von diesem Betriebszustand die möglichen Interaktionsvarianten in der Augmented-Reality-Anzeigevorrichtung angezeigt werden.

## Claims

1. Manipulator system comprising
a robotic manipulator (12),
wherein the manipulator comprises sensors for detecting a force and/or a torque applied onto the manipulator from outside,
wherein by applying a force and/or a torque on the manipulator (12) from outside, input instructions for the manipulator (12) can be generated for the operation of the manipulator system,
wherein the manipulator system further comprises an augmented reality display device via which locations on the manipulator (12) are displayed at which an instruction for the robotic manipulator (12) is generated by the application of a force and/or a torque from outside,
wherein it is displayed at a corresponding location of the manipulator (12), which instruction is generated at the corresponding location by the application of a force and/or a torque, so that the user directly and intuitively realizes which effects the application of a force and/or a torque at a particular location of the manipulator (12) will have.

2. Manipulator system of claim 1, **characterized in that** the augmented reality display device are augmented reality glasses.

3. Manipulator system of claim 1 or 2, **characterized in that** a direction is displayed in which the manipulator (12) has to be moved to generate a specific input instruction.

4. Manipulator system of claims 1-3, **characterized in that** it is displayed at the corresponding location of the manipulator (12) which instruction is generated by the application of a force and/or a torque at the corresponding location.

5. Manipulator system of claims 2-4, **characterized in that** the augmented reality glasses have markers, so that the absolute position of the augmented reality glasses in space is determined by means of a camera tracking system, wherein the position of the augmented reality glasses relative to the robotic manipulator is calculated based thereon.

6. Method for controlling a robotic manipulator (12) which is part of a manipulator system,
wherein the manipulator comprises sensors for detecting a force and/or a torque applied on the manipulator from outside,
wherein by applying a force and/or a torque onto the manipulator (12) from outside, input instructions for the manipulator (12) can be generated for the operation of the manipulator system,
wherein the manipulator system further comprises an augmented reality display device via which locations on the manipulator (12) are displayed at which an instruction for the robotic manipulator (12) is generated by the application of a force and/or a torque from outside,
wherein it is displayed at a corresponding location of the manipulator (12), which instruction is generated at the corresponding location by the application of a force and/or a torque, so that the user directly and intuitively realizes which effects the application of a force and/or a torque at a particular location of the manipulator (12) will have.

7. Method of claim 6, **characterized in that** the absolute position of the augmented realty display device in space and the joint positions of the robotic manipulator (12) are determined,
wherein the position of the augmented reality glasses relative to the robotic manipulator (12) is calculated based thereon.

8. Method of claim 6 or 7, **characterized in that** the display on the augmented reality display device is shown depending on a context and/or state which the manipulator system is in.

9. Method of one of claims 6 to 8, **characterized in that** the display at the manipulator arm on the augmented reality display device is shown depending on the operating state of the manipulator system, wherein the manipulator system having in particular at least three operating states, namely
a ready operating state in which a program is started by applying a force and/or a torque onto a specific location of the robotic manipulator (12),
a manually guided state in which the robotic manipulator (12) can be guided freely by hand, and
a collision state in which the application of a force from a first direction is interpreted as an instruction to continue, an application of a force from a second direction opens a gripper of the robotic manipulator (12), an application of a force from a third direction opposite to the second direction closes the gripper, an application of a force from a fourth direction transfers the manipulator system to the manually guided state.

10. Method of claim 9, **characterized in that** in the manually guided state, the augmented reality display device displays a virtual plane on a defined level above the robot base, in particular in parallel to a ground, wherein when the end effector of the robotic manipulator system (12) is moved to the level of this plane, the manipulator system is transferred to the collision state.

11. Method of claims 6-10, **characterized in that** it is continuously evaluated, whether the manipulator (12) is in the field of view of the user, and if so, the operating state of the manipulator system is detected and, depending on this operating state, the possible interaction variants are displayed on the augmented reality display devoice.

## Revendications

1. Système de manipulateur, comprenant un manipulateur robotique (12),
dans lequel
le manipulateur comprend des capteurs pour détecter une force et/ou un couple de rotation qui est appliqué(e) de l'extérieur sur le manipulateur,
l'application d'une force et/ou d'un couple de rotation de l'extérieur sur le manipulateur (12) permet de générer des instructions d'entrée pour le manipulateur (12), destinées à commander le système de manipulateur,
le système de manipulateur comprend en outre un dispositif d'affichage de réalité augmentée permettant d'afficher des endroits sur le manipulateur (12) auxquels une instruction pour le manipulateur robotique (12) est générée par l'application d'une force et/ou d'un couple de rotation de l'extérieur,
l'endroit correspondant du manipulateur (12) affiche quelle instruction est générée par l'application d'une force et/ou d'un couple de rotation à l'endroit correspondant, de sorte que l'utilisateur reconnaît directement et intuitivement les effets que l'application d'une force et/ou d'un couple de rotation à un endroit déterminé du manipulateur (12) va entraîner.

2. Système de manipulateur selon la revendication 1,
**caractérisé en ce que** le dispositif d'affichage de réalité augmentée est une paire de lunettes de réalité augmentée.

3. Système de manipulateur selon la revendication 1 ou 2,
**caractérisé en ce qu'**il affiche une direction dans laquelle le manipulateur (12) doit être déplacé pour générer une instruction d'entrée déterminée.

4. Système de manipulateur selon les revendications 1 à 3,
**caractérisé en ce que** l'endroit correspondant du manipulateur (12) affiche quelle instruction est générée par l'application d'une force et/ou d'un couple à l'endroit correspondant.

5. Système de manipulateur selon les revendications 2 à 4,
**caractérisé en ce que** les lunettes de réalité augmentée comportent des marqueurs, de sorte que la position absolue des lunettes de réalité augmentée dans l'espace est déterminée par un système de suivi par caméra, et, sur cette base, la position des lunettes de réalité augmentée par rapport au manipulateur robotique est calculée.

6. Procédé de commande d'un manipulateur robotique (12) qui fait partie d'un système de manipulateur,
dans lequel
le manipulateur comprend des capteurs pour détecter une force et/ou un couple de rotation qui est appliqué(e) de l'extérieur sur le manipulateur,
l'application d'une force et/ou d'un couple de rotation de l'extérieur sur le manipulateur (12) permet de générer des instructions d'entrée pour le manipulateur (12), destinées à commander le système de manipulateur,
le système de manipulateur comprend en outre un dispositif d'affichage de réalité augmentée permettant d'afficher des endroits sur le manipulateur (12) auxquels une instruction pour le manipulateur robotique (12) est générée par l'application d'une force et/ou d'un couple de rotation de l'extérieur,
l'endroit correspondant du manipulateur (12) affiche quelle instruction est générée par l'application d'une force et/ou d'un couple de rotation à l'endroit correspondant, de sorte que l'utilisateur reconnaît directement et intuitivement les effets que l'application d'une force et/ou d'un couple de rotation à un endroit déterminé du manipulateur (12) va entraîner.

7. Procédé selon la revendication 6,
**caractérisé en ce que** la position absolue du dispositif d'affichage de réalité augmentée dans l'espace et les positions des articulations du manipulateur robotique (12) sont déterminées,
et sur cette base, la position des lunettes de réalité augmentée par rapport au manipulateur robotique (12) est calculée.

8. Procédé selon la revendication 6 ou 7,
**caractérisé en ce que** l'affichage sur le dispositif d'affichage de réalité augmentée se fait en dépendance d'un contexte et/ou d'un état dans lequel se trouve le système de manipulateur.

9. Procédé selon l'une des revendications 6 à 8,
**caractérisé en ce que** l'affichage sur le dispositif d'affichage de réalité augmentée au niveau du bras de manipulateur se fait en dépendance de l'état de fonctionnement du système de manipulateur, le système de manipulateur présentant en particulier au moins trois états de fonctionnement, à savoir
un état de fonctionnement opérationnel, dans lequel un programme est lancé par l'application d'une force et/ou d'un couple de rotation à un endroit déterminé du manipulateur robotique (12),
un état guidé manuellement, dans lequel le manipulateur robotique (12) est librement déplaçable manuellement, et
un état de collision, dans lequel l'application d'une force provenant d'une première direction est interprétée comme une instruction de poursuite, l'application d'une force provenant d'une deuxième direction ouvre une pince du manipulateur robotique (12), l'application d'une force provenant d'une troisième direction, opposée à la deuxième, ferme la pince, et l'application d'une force provenant d'une quatrième direction fait passer le système de manipulateur à l'état guidé manuellement.

10. Procédé selon la revendication 9,
**caractérisé en ce que**, à l'état guidé manuellement, un plan virtuel est affiché sur le dispositif d'affichage de réalité augmentée à une hauteur définie au-dessus de la base du robot, en particulier parallèle au sol, et
lorsque l'effecteur terminal du manipulateur robotique (12) est amené à la hauteur de ce plan, le système de manipulateur passe à l'état de collision.

11. Procédé selon les revendications 6 à 10,
**caractérisé en ce qu'**il est évalué en continu pour savoir si le manipulateur (12) se trouve dans le champ de vision de l'utilisateur, et si tel est le cas, l'état de fonctionnement du système de manipulateur est détecté et les variantes d'interaction possibles sont affichées sur le dispositif d'affichage de réalité augmentée en fonction de cet état de fonctionnement.
